# EUROPÄISCHE PATENTSCHRIFT

(11) **EP 0 813 076 B1**
(45) Veröffentlichungstag und Bekanntmachung des Hinweises auf die Patenterteilung: **18.09.2002**
(21) Anmeldenummer: 97101155.6
(22) Anmeldetag: 24.01.1997
(51) Int. Cl.: G01V 8/10

(54) **Berührungslos wirkende Schutzeinrichtung, insbesondere Lichtschrankengitter**
Contactless protection device, in particular light barrier
Dispositif de protection sans contact, en particulier barrière de lumière

(30) Priorität: 13.06.1996 DE 19623651
(43) Veröffentlichungstag der Anmeldung: 17.12.1997
(73) Patentinhaber: Sick AG, 79183 Waldkirch, Breisgau (DE)
(72) Erfinder: Beck, Michael, 79183 Waldkirch (DE); Hettich, Harald, 79194 Gundelfingen (DE); Süss, Karl-Heinz, 79183 Waldkirch (DE)
(74) Vertreter: Finsterwald, Martin, Dr.

(56) Entgegenhaltungen:
- DE-A- 1 925 781
- DE-A- 4 317 931
- US-A- 5 115 129
- US-A- 5 198 664
- Konformitätsbescheinigung Physikalisch-Technische Bundesanstalt Nr. Ex-83/1072 der Firma MATRIX Elektronik AG, Wettingen. "Druckfeste Gehäuse für optoelektronische Einbauten" 2. Juni 1983 (1983-6-2) XP002129626

## Beschreibung

Die Erfindung betrifft eine berührungslos wirkende, als Lichtschrankengitter ausgelihrte Schutzeinrichtung, mit einer Sende- und/oder Empfangseinheit zur Erzeugung bzw. für den Empfang von der berührungslosen Überwachung eines Schutzfeldes dienenden Abtastsignalen wie insbesondere Lichtsignalen.

In bestimmten Anwendungsfällen werden Schutzeinrichtungen der eingangs genannten Art auch in Bereichen erhöhter Explosionsgefahr eingesetzt. Die hierbei hinsichtlich des Explosionsschutzes zu beachtenden Anforderungen sind in der Regel relativ hoch.

Es ist bekannt, berührungslos wirkende Schutzeinrichtungen für den explosionsgefährdeten Bereich in der sogenannten Zündschutzart "p", das heißt mittels Spülluft zu betreiben. Die entsprechenden Einrichtungen sind jedoch äußerst kostenaufwendig und relativ störungsanfällig.

Bei einer aus der DE-A-43 17 931 bekannten Lichtschranke, die auch in Form eines Lichtgitters ausgeführt sein kann, ist den jeweiligen optischen Elementen eine Schutzelektronik vorgeschaltet, die es gestattet, daß die optischen Bauelemente zumindest teilweise außerhalb einer jeweiligen Vergußkapselung angeordnet sein können. Dabei bildet die entsprechend verkapselte Schutzelektronik eine Art Sicherheitsbarriere.

In der "Konformitätsbescheinigung Physikalisch-Technische Bundesanstalt Nr. Ex-83/1072 der Firma MATRIX Elektronik AG, Wettingen, "Druckfeste Gehäuse für optoelektronische Einbauten" 2. Juni 1983 (1983-6-2) XP002129626" ist ein druckfestes Gehäuse für optoelektrische Einbauten angegeben. Auch gemäß dieser Bescheinigung ist das betreffende Gehäuse wieder einem einzelnen optischen Element zugeordnet.

Bei einem in der US-A-5 198 664 beschriebenen photoelektrischen Sensor sind im zugeordneten Gehäuse zwei Linsen integriert, die einem durch ein optisches Lichtsendeelement und ein optisches Lichtempfangselement gebildeten Elementenpaar zugeordnet sind. Die beiden Linsen sind auf einer Stirnseite des betreffenden Gehäuses vorgesehen. Ein vergleichbarer Sensor ergibt sich aus der US-A-5 115 129

Ziel der Erfindung ist es, eine berührungslos wirkende Schutzeinrichtung der eingangs genannten Art zu schaffen, mit der auf einfache und kostengünstige Weise auch höhere Explosionsschutzanforderungen zuverlässig eingehalten werden kann.

Die Aufgabe wird nach der Erfindung dadurch gelöst, dass zumindest die Sende- und/oder Empfangseinheit des Lichtschrankengitters in einem druckfesten, rohrförmigen Gehäuse untergebracht ist, dessen Mantel für die Abtastsignale durchlässig ist und das insbesondere einen Explosionsschutz gewährleistende Leitungsdurchführungen umfaßt, und dass der Mantel des aus lichtdurchlässigem Material bestehenden Rohres zumindest in dem das Schutzfeld definierenden Lichteintritts- bzw. Lichtaustrittsbereich das hindurchtretende Licht nach Art einer Linse optisch beeinflußt.

Aufgrund dieser Ausbildung erfüllt die berührungslos wirkende Schutzeinrichtung zuverlässig und problemlos auch höhere Explosionsschutzanforderungen, ohne daß dazu ein Betrieb mittels Spülluft erforderlich wäre. Der gewünschte Explosionsschutz wird bereits durch das mit entsprechenden Leitungsdurchführungen versehene druckfeste Gehäuse erzielt, wodurch der Mehraufwand gering gehalten wird. Das dem Explosionsschutz dienende Rohr dient gleichzeitig als optische Einrichtung, wodurch die Schutzeinrichtung im Aufbau weiter vereinfacht wird.

In dem druckfesten, vorzugsweise rohrförmigen Gehäuse kann eine integrierte Sende- und Empfangseinheit der berührungslos wirkenden Schutzeinrichtung untergebracht sein. Zudem kann die in dem druckfesten, vorzugsweise rohrförmigen Gehäuse untergebrachte Sende- und/oder Empfangseinheit auch eine Steuer- und/oder Auswerteelektronik umfassen.

Bei einer in der Praxis bevorzugten Ausführungsform umfaßt das Gehäuse ein aus lichtdurchlässigem Material bestehendes Rohr, das an wenigstens einem, vorzugsweise an beiden Enden jeweils mit einer Verschlußkappe versehen ist. Das Rohr besteht vorteilhafterweise aus Glas.

Die Länge des aus lichtdurchlässigem Material bestehenden Rohres entspricht vorzugsweise zumindest im wesentlichen der in Rohrrichtung gemessenen Ausdehnung des Schutzfeldes. Es können mehrere, unterschiedlich lange Rohre zur Verfügung gestellt werden, deren Länge auf die betreffende Ausdehnung des jeweils gewünschten Schutzfeldes abgestimmt ist.

Von besonderem Vorteil ist, wenn das aus lichtdurchlässigem Material bestehende Rohr zumindest in dem das Schutzfeld definierenden Lichteintritts- bzw. Lichtaustrittsbereich das hindurchtretende Licht beispielsweise nach Art einer Linse optisch beeinflußt.

Auf der Innenseite einer Verschlußkappe ist zweckmäßigerweise eine Aufnahme, Halterung oder dergleichen für die druckfest einzukapselnde Einheit der Schutzeinrichtung vorgesehen. Eine solche Aufnahme kann beispielsweise gabelförmig ausgebildet sein, was das Einsetzen der druckfest einzukapselnden Einheit erleichtert.

Die Leitungsdurchführungen sind zweckmäßigerweise in einer Verschlußkappe vorgesehen. In einer solchen Verschlußkappe lassen sich auch höheren Explosionsschutzanforderungen genügende Leitungsdurchführungen problemlos verwirklichen.

Bei einer in der Praxis bevorzugten Ausführungsform sind die an den beiden Enden des Rohres vorgesehenen Verschlußkappen durch sich außen entlang des Rohres erstreckende Gewindestangen unter Einschluß des Rohres fest miteinander verbunden, wodurch eine zuverlässige druckfest Einkapselung der betreffenden Einheit der Schutzeinrichtung gewährleistet wird.

Um eine problemlose Einstellung der Schutzeinrichtung zu ermöglichen, ist vorteilhafterweise wenigstens eine Verschlußkappe mit einer äußeren, ein Justieren um wenigstens zwei, insbesondere drei Achsen zulassenden Halterung versehen.

In den Unteransprüchen sind weitere vorteilhafte Ausführungsvarianten der erfindungsgemäßen Schutzeinrichtung angegeben.

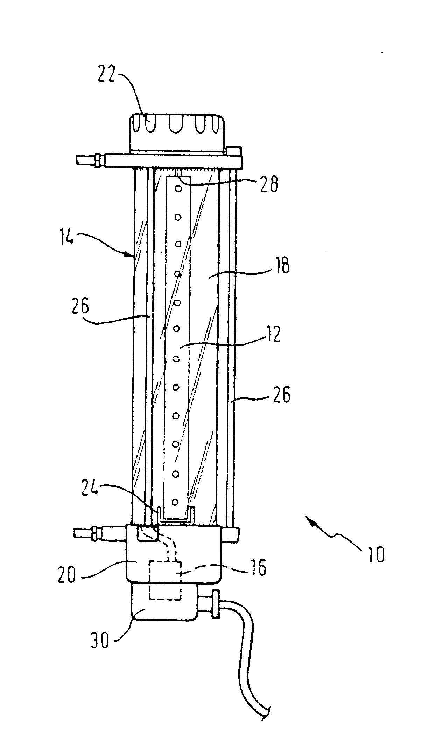

Die Erfindung wird im folgenden anhand eines Ausführungsbeispiels unter Bezugnahme auf die Zeichnung näher beschrieben. Deren einzige Figur zeigt eine schematische, stark vereinfachte Darstellung eines Lichtschrankengitters mit einem druckfest gekapselten Gehäuses.

Das in der Figur dargestellte Lichtschrankengitter 10 umfaßt eine integrierte Sende- und Empfangseinheit 12 zur Erzeugung bzw. für den Empfang von der berührungslosen Überwachung eines Schutzfeldes dienenden Lichtsignalen.

Die Sende- und Empfangseinheit 12, die insbesondere auch eine Steuer- und/oder Auswerteelektronik umfassen kann, ist in einem druckfest gekapselten Gehäuse 14 untergebracht, das mit einen Explosionsschutz gewährleistenden Leitungsdurchführungen 16 versehen ist.

Das Gehäuse 14 umfaßt ein für die Lichtsignale durchlässiges Glasrohr 18, das an seinen beiden Enden jeweils mit einer Verschlußkappe 20, 22 versehen ist. Das eine relativ große Wanddicke besitzende Glasrohr 18 kann beispielsweise einen Außendurchmesser von etwa 132 mm aufweisen.

Die Länge des Glasrohres 18 ist auf die jeweilige Schutzfeldhöhe der einzubauenden Sende- und Empfangseinheit 12 abgestimmt. Für unterschiedliche Schutzfeldhöhen können unterschiedliche Glasrohre 18 bereitgestellt werden.

Das für die Lichtsignale durchlässige Glasrohr 18 kann so beschaffen sein, daß es zumindest in dem das Schutzfeld definierenden Lichteintritts- und Lichtaustrittsbereich das hindurchtretende Licht insbesondere nach Art einer Linse optisch beeinflußt.

Auf der Innenseite der unteren Verschlußkappe 20 ist eine im vorliegendem Fall allgemein gabelförmige Aufnahme 24 für die druckfest einzukapselnde integrierte Sende- und Empfangseinheit 12 vorgesehen. Die gegenüberliegende obere Verschlußkappe 22 ist auf ihrer Innenseite mit einer Vorrichtung 28 zum Zentrieren der eingebauten Licht- und Empfangseinheit 12 versehen. Die explosionsschutzgeprüften Leitungsdurchführungen 16 sind beim dargestellten Ausführungsbeispiel in der unteren Verschlußkappe 20 mit darauf angesetzter, vorzugsweise mit einer PG-Verschraubung versehener Schutzhaube 30 vorgesehen. Diese Leitungsdurchführungen können grundsätzlich zwar auch in der oberen Verschlußkappe 22 vorgesehen sein. Diese ist dafür jedoch weniger geeignet, da sie beim vorliegenden Ausführungsbeispiel vorzugsweise als schraubbarer Drehdeckel ausgeführt ist und damit das darin sitzende vergossene Teil der Durchführung mit den daran angeschlossenen Kabeln beim Verschließen verdreht werden müßte.

Im druckfest zu kapselnden Raum wird die Sende- und Empfangseinheit 12 vor Auslieferung des Lichtschrankengitters mit den Leitungsdurchführungen 16 verbunden. Die andere Seite der Leitungsdurchführungen 16 endet mit Anschlußstützpunkten in einem nicht gezeigten Anschlußraum, der ebenfalls den jeweiligen Explosionsschutzanforderungen genügen muß. Dazu können beispielsweise gesicherte Schraubverbindungen oder dergleichen vorgesehen sein. Auch der Anschlußraum enthält einen Explosionsschutz gewährleistende Leitungsdurchführungen. Bei einer praktischen Ausführungsform ist dieser durch einen Schraubdeckel oder dergleichen verschlossen.

Die an den beiden Enden des Glasrohres 18 vorgesehenen Verschlußkappen 20, 22 sind durch sich außen entlang des Rohres erstreckende Gewindestangen 26 unter Einschluß des Glasrohres 18 fest miteinander verbunden. Das Glasrohr 18 wird somit fest zwischen den Verschlußkappen 20, 22 gehalten.

Zumindest eine der beiden Verschlußkappen 20, 22 kann einen fest auf der betreffenden Stirnseite des Glasrohres 18 sitzenden, beispielsweise aus Aluminium bestehenden Ring und einen auf diesen Ring aufschraubbaren Deckel umfassen. Dieser Ring kann mit einer Halterung zum Befestigen des Licht-Zweckmäßigerweise ist an jeder Verschlußkappe 20, 22 eine äußere Halterung angebracht, die ein Justieren um zwei oder drei Achsen zuläßt.

Im vorliegenden Fall sind die Leitungsdurchführungen 16 für einen sechspoligen Anschluß ausgelegt. Ein siebter Anschluß ist mit den aus Metall bestehenden Teilen des Gehäuses 14 verbunden.

## Patentansprüche

1. Berührungslos wirkende, als Lichtschrankengitter (10) ausgeführte Schutzeinrichtung, mit einer Sende- und/oder Empfangseinheit (12) zur Erzeugung bzw. für den Empfang von der berührungslosen Überwachung eines Schutzfeldes dienenden Abtastsignalen wie insbesondere Lichtsignalen,
**dadurch gekennzeichnet,**
**daß** zumindest die Sende- und/oder Empfangseinheit (12) des Lichtschrankengitters (10) in einem druckfesten, rohrförmigen Gehäuse (14) untergebracht ist, dessen Mantel für die Abtastsignale durchlässig ist und das insbesondere einen Explosionsschutz gewährleistende Leitungsdurchführungen (16) umfaßt, und dass der Mantel des aus lichtdurchlässigem Material bestehenden Rohres (18) im Gabrauch zumindest in dem das Schutzfeld definierenden Lichteintritts- bzw. Lichtaustrittsbereich das hindurchtretende Licht nach Art einer Linse optisch beeinflußt.

2. Schutzeinrichtung nach Anspruch 1,
**dadurch gekennzeichnet,**
**daß** eine integrierte Sende- und Empfangseinheit (12) vorgesehen und in dem druckfesten Gehäuse (14) untergebracht ist, und/oder daß die in dem druckfesten Gehäuse (14) untergebrachte Sendeund/oder Empfangseinheit (12) eine Steuer- und/oder Auswerteelektronik umfaßt.

3. Schutzeinrichtung nach einem der vorhergehenden Ansprüche,
**dadurch gekennzeichnet,**
**daß** das Gehäuse (14) ein aus lichtdurchlässigem Material bestehendes Rohr (18) umfaßt, das an wenigstens einem, vorzugsweise an beiden Enden jeweils mit einer Verschlußkappe (20, 22) versehen ist, wobei insbesondere das Rohr (18) aus Glas besteht.

4. Schutzeinrichtung nach einem der vorhergehenden Ansprüche,
**dadurch gekennzeichnet,**
**daß** die Länge des aus lichtdurchlässigem Material bestehenden Rohres (18) zumindest im wesentlichen der in Rohrrichtung gemessenen Ausdehnung des Schutzfeldes entspricht.

5. Schutzeinrichtung nach einem der vorhergehenden Ansprüche,
**dadurch gekennzeichnet,**
**daß** auf der Innenseite einer Verschlußkappe (20, 22) eine Aufnahme (24) oder Halterung für die druckfest einzukapselnde Einheit der Schutzeinrichtung vorgesehen ist, wobei insbesondere die Aufnahme (24) gabelförmig ausgebildet ist.

6. Schutzeinrichtung nach Anspruch 5,
**dadurch gekennzeichnet,**
**daß** auf der Innenseite der gegenüberliegenden Verschlußkappe (22) eine Vorrichtung (28) zum Zentrieren der druckfest einzukapselnden Einrichtung der Schutzeinrichtung vorgesehen ist.

7. Schutzeinrichtung nach einem der vorhergehenden Ansprüche,
**dadurch gekennzeichnet,**
**daß** die Leitungsdurchführungen (16) in einer Verschlußkappe (20) vorgesehen sind.

8. Schutzeinrichtung nach einem der vorhergehenden Ansprüche,
**dadurch gekennzeichnet, daß** wenigstens eine Verschlußkappe (29, 22) einen fest auf der betreffenden Stirnseite des Rohres (18) sitzenden Ring und einen auf den Ring aufschraubbaren Deckel umfaßt, wobei insbesondere am Ring eine Halterung zum Befestigen der Schutzeinrichtung vorgesehen ist.

9. Schutzeinrichtung nach einem der vorhergehenden Ansprüche,
**dadurch gekennzeichnet,**
**daß** die an den beiden Enden des Rohres vorgesehenen Verschlußkappen (20, 22) durch sich außen entlang des Rohres (18) erstreckende Gewindestangen (26) unter Einschluß des Rohres (18) fest miteinander verbunden sind.

10. Schutzeinrichtung nach einem der vorhergehenden Ansprüche,
**dadurch gekennzeichnet,**
**daß** wenigstens eine Verschlußkappe (20, 22) mit einer äußeren, ein Justieren um wenigstens zwei, insbesondere drei Achsen zulassenden Halterung versehen ist, und/oder daß die Verschlußkappen (29, 22) aus Leichtmetall, vorzugsweise aus Aluminium bestehen.

## Claims

1. Protective device operating without contact, and designed as a light barrier grid (10), comprising a transmitting unit and/or receiving unit (12) for producing and/or for receiving sensing signals, such as in particular light signals, serving for the contact-free monitoring of a protected area, **characterized in that** at least the transmitter unit and/or the receiver unit (12) of the protective device (10) is accommodated in a pressure-tight tubular housing (14) whose jacket is permeable for the sensing signals and which in particular includes cable lead-throughs (16) ensuring protection against explosion; and **in that** the jacket of the tube consisting of light permeable material optically influences the light passing through at least in the light entry region and/or in the light exit region defining the protected area in the manner of a lens in use.

2. Protective device in accordance with claim 1, **characterized in that** an integrated transmitter unit and receiver unit (12) is provided and is accommodated in the pressure-tight housing (14); and or **in that** the transmitter unit and/or receiver unit (12) accommodated in the pressure-tight housing (14) includes an electronic control and/or evaluation system.

3. Protective device in accordance with any of the preceding claims, **characterized in that** the housing (14) comprises a tube (18) consisting of a light-permeable material and provided at at least one end, preferably at both ends, with a respective closure cap (20, 22), wherein the tube (18) in particular consists of glass.

4. Protective device in accordance with any of the preceding claims, **characterized in that** the length of the tube (18) consisting of light-permeable material corresponds at least substantially to the extent of the protected area measured in the tube direction.

5. Protective device in accordance with any of the preceding claims, **characterized in that** a mount (24) or holder for the unit of the protective device which is to be encapsulated in pressure-tight manner is provided at the inner side of one closure cap (20, 22), wherein in particular the mount (24) is of fork-like design.

6. Protective device in accordance with claim 5, **characterized in that** a device (28) for centering the unit of the protective device which is to be encapsulated in pressure-tight manner is provided at the inner side of the oppositely disposed closure cap (22).

7. Protective device in accordance with any of the preceding claims, **characterized in that** the cable lead-throughs (16) are provided in a closure cap (20).

8. Protective device in accordance with any of the preceding claims, **characterized in that** at least one closure cap (29, 22) includes a ring which is firmly seated on the relevant end face of the tube (18) and a cover which can be screwed onto the ring, wherein in particular a holder for the mounting of the protective device is provided at the ring.

9. Protective device in accordance with any of the preceding claims, **characterized in that** the closure caps (20, 22) provided at the two ends of the tube are firmly connected together through the intermediary of the tube (18) by threaded bars (26) extending along the tube (18) at the outside.

10. Protective device in accordance with any of the preceding claims, **characterized in that** at least one closure cap (20, 22) is provided with an outer holder permitting adjustment about at least two and in particular about three axes; and/or **in that** the closure caps (29, 22) consist of a lightweight metal, preferably of aluminum.

## Revendications

1. Dispositif de protection sans contact sous forme de barrière de lumière (10), avec une unité d'émission et/ou de réception (12) pour générer ou pour la réception des signaux de balayage, tels que notamment des signaux lumineux, servant à la surveillance sans contact d'un champ de protection, **caractérisé en ce qu'**au moins l'unité d'émission et/ou de réception (12) de la barrière lumineuse (10) est logée dans un boîtier (14) tubulaire résistant à la pression, dont l'enveloppe est perméable aux signaux de balayage, et qui comprend des passages de câbles (16) assurant notamment une protection antidéflagrante, et **en ce que** pendant l'utilisation l'enveloppe du tube (18) en matière transparente exerce une influence optique, comme une lentille, sur la lumière passante, du moins dans le champ de protection définissant la zone d'entrée ou la zone de sortie de la lumière.

2. Dispositif de protection selon la revendication 1, **caractérisé en ce qu'**une unité d'émission et de réception (12) intégrée est prévue et logée dans le boîtier (14) résistant à la pression, et/ou **en ce que** l'unité d'émission et/ou de réception (12) logée dans le boîtier (14) résistant à la pression comprend une électronique de commande et/ou d'analyse.

3. Dispositif de protection selon l'une quelconque des revendications précédentes, **caractérisé en ce que** le boîtier (14) comprend un tube (18) en matière transparente pourvu à au moins l'une des extrémités, de préférence aux deux extrémités, respectivement d'un capuchon d'obturation (20, 22), dans lequel le tube (18) est notamment en verre.

4. Dispositif de protection selon l'une quelconque des revendications précédentes, **caractérisé en ce que** la longueur du tube (18) en matière transparente correspond, du moins pour l'essentiel, à l'étendue du champ de protection mesurée en direction du tube.

5. Dispositif de protection selon l'une quelconque des revendications précédentes, **caractérisé en ce que** sur la face intérieure d'un capuchon d'obturation (20, 22) un logement (24) ou un support est prévu pour l'unité du dispositif de protection devant être encapsulée pour résister à la pression, dans lequel le logement (24) a notamment la forme d'une fourche.

6. Dispositif de protection selon la revendication 5, **caractérisé en ce que** sur la face intérieure du capuchon d'obturation (22) opposé un dispositif (28) est prévu pour le centrage de l'unité du dispositif de protection devant être encapsulée pour résister à la pression.

7. Dispositif de protection selon l'une quelconque des revendications précédentes, **caractérisé en ce que** les passages de câbles (16) sont prévus dans un capuchon d'obturation (20).

8. Dispositif de protection selon l'une quelconque des revendications précédentes, **caractérisé en ce qu'**au moins un capuchon d'obturation (20, 22) comprend un anneau fixé sur la face frontale correspondante du tube (18) ainsi qu'un couvercle pouvant être vissé sur l'anneau, un support étant notamment prévu sur l'anneau pour fixer le dispositif de protection.

9. Dispositif de protection selon l'une quelconque des revendications précédentes, **caractérisé en ce que** les capuchons d'obturation (20, 22) prévus aux deux extrémités du tube sont rendus solidaires l'un de l'autre à l'aide de tiges filetées (26) s'étendant le long du tube (18) à l'extérieur de celui-ci et incluant le tube (18).

10. Dispositif de protection selon l'une quelconque des revendications précédentes, **caractérisé en ce qu'**au moins un capuchon d'obturation (20, 22) est pourvu d'un support extérieur permettant un ajustement autour d'au moins deux, notamment trois axes, et/ou **en ce que** les capuchons d'obturation (20, 22) sont en métal léger, de préférence en aluminium.
